# FASCICULE DE BREVET EUROPEEN

(11) **EP 1 677 905 B1**
(45) Date de publication et mention de la délivrance du brevet: **03.12.2008**
(21) Numéro de dépôt: 04791455.1
(22) Date de dépôt: 01.10.2004
(51) Int. Cl.: B01J 13/00, C10L 1/10, C10L 10/06

(54) **UTILISATION D'UNE DISPERSION COLLOIDALE ORGANIQUE DE CERIUM ET D'UN ELEMENT CHOISI PARMI LE RHODIUM ET LE PALLADIUM COMME ADJUVANT DE GAZOLES POUR MOTEURS A COMBUSTION INTERNE**
vERWENDUNG EINER ORGANISCHEN KOLLOIDALEN LÖSUNG VON CER UND EINEM UNTER RHODIUM UND PALLADIUM AUSGEWÄHLTEN ELEMENT ALS ADDITIV ZU DIESELKRAFTSTOFF FÜR BRENNKRAFTMASCHINEN
USE OF A CERIUM ORGANIC COLLOIDAL DISPERSION AND ELEMENT SELECTED FROM RHODIUM AND PALLADIUM AS AN ADDITIVE TO DIESEL FUEL FOR INTERNAL COMBUSTION ENGINES

(30) Priorité: 03.10.2003 FR 0311614
(43) Date de publication de la demande: 12.07.2006
(73) Titulaire: Rhodia Electronics and Catalysis, 17041 La Rochelle Cedex (FR)
(72) Inventeur: BLANCHARD, Gilbert, F-60330 Lagny-le-Sec (FR); TOLLA, Bruno, F-75005 Paris (FR)
(74) Mandataire: Dubruc, Philippe
(86) Numéro de dépôt international: PCT/FR2004/002491
(87) Numéro de publication internationale: WO 2005/032705

(56) Documents cités:
- EP-A- 0 681 992
- WO-A-01/10545
- WO-A-99/67509
- WO-A-03/040270
- FR-A- 2 801 299

## Description

La présente invention concerne l'utilisation comme adjuvant de gazoles pour moteurs à combustion interne d'une dispersion colloïdale organique de cérium et d'un élément choisi parmi le rhodium et le palladium.

On sait que lors de la combustion du gazole dans le moteur diesel, les produits carbonés ont tendance à former des suies, qui sont réputées nocive tant pour l'environnement que pour la santé. On recherche depuis longtemps des techniques qui permettent de réduire l'émission de ces particules carbonées.

Une solution satisfaisante et maintenant utilisée en grande série consiste à collecter les particules sur un filtre qui est régénéré régulièrement pour en éviter le colmatage. La régénération du filtre est d'autant plus facilitée que la température d'auto-inflammation des suies est faible ce qui peut être obtenu par introduction d'un catalyseur au coeur même des suies lors de la combustion. Cette technologie, connue sous le nom de « Fuel Borne Catalysis » ou FBC est également largement utilisée. Les suies ainsi additivées présentent une température d'auto-inflammation suffisamment basse pour être fréquemment atteinte pendant une marche normale du moteur ou lors de cycles de régénération spécifiques.

On sait que des dispersions de composés de terre rare, utilisées comme adjuvant des carburants, peuvent contribuer à la réduction de la température d'auto-inflammation des suies.

Par ailleurs, on cherche aussi à limiter l'émission des oxydes d'azote (NOx) par les moteurs diesel.

WO 03/040270 décrit un adjuvant pour carburant à base de nanoparticules d'oxyde de cérium, utilisé pour faciliter la combustion des suies et réduire la teneur en produits toxiques des gaz d'échappement. Ce document ne vise pas cependant spécifiquement la réduction des oxydes d'azote.

Il existe donc un besoin réel d'un catalyseur efficace permettant à la fois d'abaisser la température de combustion des suies et de réduire la teneur en NOx dans les gaz d'échappement des moteurs diesel.

L'objet de l'invention est de fournir un tel catalyseur.

Dans ce but, l'invention concerne l'utilisation d'une dispersion colloïdale comme adjuvant de carburant pour moteurs à combustion interne pour diminuer l'émission des oxydes d'azote dans les gaz d'échappement des moteurs, utilisation qui est caractérisée en ce que la dispersion comprend des particules d'un composé de cérium, un acide et une phase organique ainsi qu'un composé d'au moins un élément choisi parmi le rhodium et le palladium.

Selon une première variante de l'invention, la dispersion colloïdale est caractérisée en ce qu'elle comprend des particules d'un composé de cérium et d'une autre terre rare.

Selon une autre variante de l'invention, la dispersion colloïdale est caractérisée en ce qu'elle comprend des particules à base d'un composé de cérium, éventuellement d'une autre terre rare, et de fer.

D'autres caractéristiques, détails et avantages de l'invention apparaîtront encore plus complètement à la lecture de la description qui va suivre, ainsi que d'exemples concrets mais non limitatifs destinés à l'illustrer.

Pour la suite de la description, on entend par terre rare les éléments du groupe constitué par l'yttrium et les éléments de la classification périodique de numéro atomique compris inclusivement entre 57 et 71.

L'expression « dispersion colloïdale» désigne dans la présente description tout système constitué de fines particules solides de dimensions colloïdales à base d'un composé de cérium et, suivant les variantes mentionnées ci-dessus, d'une terre rare autre que le cérium et/ou de fer, en suspension dans une phase liquide, lesdites particules pouvant, en outre, éventuellement contenir des quantités résiduelles d'ions liés ou adsorbés tels que par exemple des nitrates, des acétates, des citrates ou des ammoniums. Par dimensions colloïdales, on entend des dimensions comprises entre environ 1 nm et environ 500nm. Les particules peuvent plus particulièrement présenter une taille moyenne d'au plus 250 nm environ, notamment d'au plus 100 nm, de préférence d'au plus 20 nm et encore plus préférentiellement d'au plus 15 nm. On notera que dans de telles dispersions, le cérium, l'autre terre rare et/ou le fer peuvent se trouver soit, de préférence, totalement sous la forme de colloïdes, soit sous la forme de colloïdes et partiellement sous la forme d'ions.

Plus particulièrement, lorsque les particules de la dispersion de l'invention sont à base d'un composé de plusieurs éléments, c'est à dire cérium, autre terre rare et/ou fer, ces éléments sont en mélange au sein de chaque particule, ces éléments se présentant généralement sous forme d'oxydes mixtes et/ou d'oxydes mixtes hydratés (oxyhydroxydes).

Le cérium est principalement sous forme de cérium IV. Par exemple, la teneur en cérium III par rapport au cérium IV (teneur exprimée par le rapport atomique Ce III/Ce total) est généralement d'au plus 40%. Elle peut varier en fonction des modes de réalisation des dispersions utilisées et être ainsi d'au plus 20%, plus particulièrement d'au plus 10%, et encore plus particulièrement d'au plus 1%.

Dans le cas de la première variante précitée, la terre rare autre que le cérium peut être plus particulièrement le lanthane ou le praséodyme. Bien entendu, la présente variante couvre le cas où la particule est un composé de cérium et de plusieurs autres terres rares en combinaison.

La proportion en terre rare autre que le cérium est de préférence d'au moins 10 %, plus particulièrement d'au moins 20 %, et encore plus particulièrement d'au plus 50 %, en mole par rapport au nombre de moles total de cérium et de terre rare exprimés en oxyde.

Dans le cas de la seconde variante, la proportion en cérium est de préférence d'au plus 50%, plus particulièrement d'au plus 20% et encore plus particulièrement d'au plus 10%, cette proportion étant exprimée en mole d'oxyde de cérium CeO₂ par rapport au nombre total de moles d'oxyde de cérium et d'oxyde de fer Fe₂O₃.

Les deux variantes peuvent être combinées, c'est à dire que les particules peuvent être des composés de cérium, d'au moins une autre terre rare et de fer.

Selon la caractéristique principale de l'invention, la dispersion colloïdale contient en outre un composé d'au moins un élément choisi parmi le rhodium et le palladium. L'invention s'applique en particulier au cas où le rhodium et le palladium sont présents en combinaison. Le palladium a pour effet en outre de favoriser l'oxydation du CO et des hydrocarbures imbrulés des gaz d'échappement.

Généralement, la teneur en rhodium et/ou en palladium est d'au plus 5%, plus particulièrement d'au plus 1% et encore plus particulièrement d'au plus 0,5% par rapport à l'ensemble des éléments cérium, autre terre rare et fer des particules. Cette teneur est exprimée en % en masse de rhodium et/ou palladium métal par rapport à la somme des masses de cérium, de terre rare et de fer élémentaires. La limite haute pour la teneur en rhodium et/ou palladium n'est pas critique, elle est simplement d'ordre économique, une quantité trop grande de ces éléments entraîne un coût plus élevé de la dispersion sans apporter d'avantages techniques. La limite basse est celle en deça de laquelle on n'observe plus d'effet du rhodium et/ou du palladium pour la réduction des rejets d'oxydes d'azote. Cette limite basse est généralement d'environ 100ppm.

Dans le cas des dispersions obtenues selon le mode de préparation qui sera donné plus loin, on peut penser que le rhodium et/ou le palladium sont présents principalement aussi sous forme d'oxydes ou d'oxydes hydratés. Toujours dans ce même cas, le rhodium et/ou le palladium sont par ailleurs présents dans la dispersion essentiellement en étant liés aux particules du composé de cérium. Cette liaison entre l'élément rhodium et/ou palladium et les particules peut être de type chimique et elle peut se faire aussi par adsorption entre ledit élément et la surface de la particule.

La dispersion colloïdale selon l'invention comporte au moins un acide, avantageusement amphiphile. L'acide est plus particulièrement choisi parmi les acides organiques qui comportent au moins 6 atomes de carbone, encore plus particulièrement de 10 à 60 atomes de carbone, de préférence de 15 à 25 atomes de carbone.

Ces acides peuvent être linéaires ou ramifiés. Ils peuvent être des acides aryliques, aliphatiques ou arylaliphatiques, portant éventuellement d'autres fonctions à condition que ces fonctions soient stables dans les milieux où l'on désire utiliser les dispersions selon la présente invention. Ainsi, on peut mettre en oeuvre par exemple des acides carboxyliques aliphatiques, des acides sulfoniques aliphatiques, des acides phosphoniques aliphatiques, des acides alcoylarylsulfoniques et des acides alcoylarylphosphoniques possédant environ de 10 à environ de 40 atomes de carbone, qu'ils soient naturels ou synthétiques. Il est bien entendu possible d'utiliser les acides en mélange.

On peut aussi utiliser des acides carboxyliques dont la chaîne carbonée porte des fonctions cétoniques comme les acides pyruviques substitués en alpha de la fonction cétone. Cela peut être également des acides alpha-halogéno carboxyliques ou des acides alpha-hydroxycarboxyliques. La chaîne rattachée au groupe carboxylique peut porter des insaturations. Toutefois en général on tend à éviter de trop nombreuses doubles liaisons car le cérium catalyse la réticulation des doubles liaisons. La chaîne peut être interrompue par des fonctions éther ou ester à condition de ne pas trop altérer la lipophilicité de la chaîne porteuse du groupe carboxylique.

A titre d'exemple, on peut citer les acides gras de tallol, d'huile de soja, de suif, d'huile de lin, l'acide oléique, l'acide linoléique, l'acide stéarique et ses isomères, l'acide pélargonique, l'acide caprique, l'acide laurique, l'acide myristique, l'acide dodécylbenzènesulfonique, l'acide éthyl-2 hexanoïque, l'acide naphténique, l'acide hexoïque, l'acide toluène sulfonique, l'acide toluène phosphonique, l'acide lauryl sulfonique, l'acide lauryl phosphonique, l'acide palmityl sulfonique, et l'acide palmityl phosphonique.

Dans le cadre de la présente invention, le terme " acide amphiphile " peut également désigner d'autres agents amphiphiles comme par exemple les alkyl éthers phosphates polyoxyéthylénés. On entend ici les phosphates de formule : 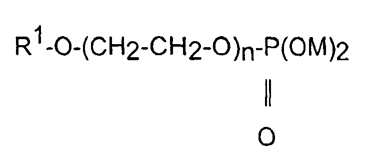 ou encore les phosphates de dialcoyle polyoxyéthylénés de formule : 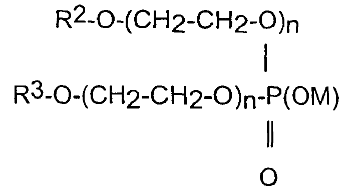 dans lesquelles :
■ R¹, R², R³, identiques ou différents représentent un radical alkyl linéaire ou ramifié, notamment de 2 à 20 atomes de carbone; un radical phényle; un radical alkylaryl, plus particulièrement un radical alkylphényl, avec notamment une chaîne alkyle de 8 à 12 atomes de carbone; un radical arylalkyle, plus particulièrement un radical phénylaryl;
■ n le nombre d'oxyde d'éthylène pouvant aller de 0 à 12 par exemple;
■ M représente un atome d'hydrogène, de sodium ou de potassium.

Le radical R¹ peut être notamment un radical hexyle, octyle, décyle, dodécyle, oléyle, nonylphényle.

On peut citer comme exemple de ce type de composés amphiphiles ceux commercialisés sous les marques Lubrophos® et Rhodafac® vendu par Rhodia et notamment les produits ci-dessous :
- les poly-oxy-éthylène alkyl (C8-C10) éthers phosphates Rhodafac® RA 600
- le poly-oxyéthylène tridécyl éther phosphate Rhodafac® RS 710 ou RS 410
- le poly-oxy-éthylène oléocétyl éther phosphate Rhodafac® PA 35
- le poly-oxy-éthylène nonylphenyl éther phosphate Rhodafac® PA 17
- le poly-oxy-éthylène nonyl(ramifié) éther phosphate Rhodafac® RE 610.

Les dispersions de l'invention comprennent en outre une phase liquide qui est une phase organique et dans laquelle les particules sont en suspension

A titre d'exemple de phase organique, on peut citer les hydrocarbures aliphatiques comme l'hexane, l'heptane, l'octane, le nonane, les hydrocarbures cycloaliphatiques inertes tels que le cyclohexane, le cyclopentane, le cycloheptane, les hydrocarbures aromatiques tels que le benzène, le toluène, l'éthylbenzène, les xylènes, les naphtènes liquides. Conviennent également les coupes pétrolières du type Isopar ou Solvesso (marques déposées par la Société EXXON), notamment Solvesso 100 qui contient essentiellement un mélange de méthyléthyl- et triméthyl-benzène, le Solvesso 150 qui renferme un mélange d'alcoylbenzènes en particulier de diméthylbenzène et de tétraméthylbenzène et l'Isopar qui contient essentiellement des hydrocarbures iso- et cyclo-paraffiniques en C-11 et C-12. On peut aussi citer, comme autres coupes pétrolières, celles de type Petrolink^{®} de la société Petrolink ou de type Isane^{®} de la société Total.

On peut mettre en oeuvre également pour la phase organique des hydrocarbures chlorés tels que le chloro- ou le dichloro-benzène, le chlorotoluène. Les éthers ainsi que les cétones aliphatiques et cycloaliphatiques comme par exemple l'éther de diisopropyle, l'éther de dibutyle, la méthyléthylcétone, la méthylisobutylcétone, la diisobutylcétone, l'oxyde de mésityle, peuvent être envisagés.

Les esters peuvent être envisagés, mais ils présentent l'inconvénient de risquer d'être hydrolysés. On peut citer comme esters susceptibles d'être utilisés ceux issus de la réaction d'acides avec des alcools en C1 à C8 et notamment les palmitates d'alcools secondaires tel l'isopropanol. On peut mentionner l'acétate de butyle à titre d'exemple.

Bien entendu, la phase organique peut être à base d'un mélange de deux ou plusieurs hydrocarbures ou composés du type décrit ci-dessus.

Les dispersions selon l'invention présentent une concentration en composés de cérium, de l'élément rhodium et/ou palladium et, éventuellement de l'autre terre rare et de fer, qui généralement peut aller jusqu'à 40 % en poids d'oxydes de ces éléments par rapport au poids total de la dispersion. Au-delà de 40% la viscosité de la dispersion risque d'être trop élevée, notamment à basse température. Il est préférable toutefois que cette concentration soit d'au moins 5%. Des concentrations inférieures sont économiquement moins intéressantes à cause du volume de phase liquide qui devient trop important.

La proportion entre la phase organique et le ou les acides n'est pas critique. Le rapport pondéral entre la phase organique et le ou les acides est choisi, de préférence, entre 0,3 et 2,0.

La dispersion de l'invention peut se présenter selon un mode de réalisation spécifique.

Selon ce mode de réalisation, la dispersion est telle qu'au moins 90 % des particules sont monocristallines. On entend par particules "monocristallines ", des particules qui, lorsque l'on examine la dispersion par MET (microscopie électronique à transmission haute résolution), apparaissent individualisées et constituées d'une seule cristallite.

On peut aussi utiliser la technique de cryo-MET pour déterminer l'état d'agrégation des particules élémentaires. Elle permet d'observer par microscopie électronique à transmission (MET) des échantillons maintenus congelés dans leur milieu naturel qui est soit de l'eau soit des diluants organiques tels que les solvants aromatiques ou aliphatiques comme par exemple le Solvesso et l'Isopar ou bien certains alcools tel que l'éthanol.

La congélation s'effectue sur des films minces d'environ 50 à 100 nm d'épaisseur soit dans l'éthane liquide pour les échantillons aqueux soit dans l'azote liquide pour les autres.

Par cryo-MET l'état de dispersion des particules est bien préservé et représentatif de celui présent dans le milieu réel.

Selon ce mode de réalisation, les particules présentent une granulométrie fine et resserrée. En effet, elles présentent un d₅₀ compris entre 1 et 5 nm, de préférence entre 2 et 4 nm.

Dans la présente description, les caractéristiques de granulométrie font référence à des notations du type dₙ où n est un nombre de 1 à 99. Cette notation représente la taille des particules telle que n % en nombre desdites particules ait une taille inférieure ou égale à ladite taille. Par exemple, un d₅₀ de 3 nanomètres signifie que 50 % en nombre des particules ont une taille inférieure ou égale à 3 nanomètres.

La granulométrie est déterminée par microscopie électronique à transmission (MET), de manière classique, sur un échantillon préalablement séché sur une membrane de carbone supportée sur grille de cuivre.

Cette technique de préparation est préférée car elle permet une meilleure précision de la mesure de la taille des particules. Les zones choisies pour les mesures sont celles qui présentent un état de dispersion semblable à celui observé en cryo-MET.

La dispersion selon le mode de réalisation spécifique donné ci-dessus peut être préparée par un procédé qui comporte les étapes suivantes :
a) on prépare un mélange aqueux comprenant au moins un sel de cérium, éventuellement un sel d'une terre rare autre que le cérium ou un sel de fer, et un sel d'au moins un élément choisi parmi le rhodium et le palladium;
b) on met le mélange aqueux de l'étape (a) en contact avec un milieu basique pour former un mélange réactionnel dont le pH est maintenu à un pH basique, ce par quoi on obtient un précipité;
c) on met en contact le précipité ainsi obtenu avec un acide et une phase organique, pour obtenir une dispersion colloïdale organique.

La première étape du procédé (étape a) consiste à préparer un mélange aqueux, sous forme habituellement d'une solution ou dispersion, d'élément(s) rentrant dans la composition des particules que l'on cherche à obtenir. Ce mélange comprend des sels, de préférence solubles, plus particulièrement un acétate et/ou un nitrate, de cérium et de rhodium et/ou de palladium. Dans le cas de la préparation de dispersions suivant les différentes variantes décrites plus haut, ce mélange pourra comporter en outre des sels des autres éléments nécessaires, c'est à dire des sels d'une terre rare autre que le cérium et/ou un sel de fer.

L'étape suivante (étape b) consiste à mettre en contact le mélange aqueux précité avec un milieu basique. Par milieu basique on entend tout milieu présentant un pH supérieur à 7. Le milieu basique sera habituellement une solution aqueuse contenant une base. On peut utiliser notamment comme base, les produits du type hydroxyde. On peut citer les hydroxydes alcalins ou alcalino-terreux. On peut aussi utiliser les amines secondaires, tertiaires, ou quaternaires. Toutefois, les amines et l'ammoniaque peuvent être préférés dans la mesure où ils diminuent les risques de pollution par les cations alcalins ou alcalino-terreux. On peut aussi mentionner l'urée.

La mise en contact du mélange précité et du milieu basique se fait dans des conditions telles que le pH du mélange réactionnel que l'on forme reste basique. Ainsi, on maintient le pH du mélange réactionnel à une valeur d'au moins 7, plus particulièrement d'au moins 7,5, et encore plus particulièrement comprise entre 7,5 et 11.

La mise en contact du mélange aqueux et du milieu basique peut se faire par introduction du mélange précité dans le milieu basique. Il est possible de réaliser la mise en contact en continu, la condition de pH étant réalisée en réglant les débits respectifs du mélange et du milieu basique.

Il est possible, selon un mode de réalisation particulier de l'invention, de travailler dans des conditions telles que lors de la mise en contact du mélange avec le milieu basique on maintienne constant le pH du milieu réactionnel ainsi formé. Par pH constant on entend une variation du pH d'au plus ± 0,2 unité de pH par rapport à la valeur fixée. De telles conditions peuvent être obtenues en ajoutant lors de l'introduction du mélange dans le milieu basique une quantité supplémentaire de base au mélange réactionnel formé.

La mise en contact se fait habituellement à température ambiante. Cette mise en contact peut avantageusement être réalisée sous atmosphère d'air ou d'azote ou d'un mélange azote-air.

A l'issue de la réaction, on récupère un précipité.

On peut éventuellement séparer ce précipité de ses eaux mères par filtration, centrifugation ou tout autre moyen connu de l'homme de l'art permettant une telle séparation. Le produit séparé peut être lavé.

De préférence, le précipité est laisé sous forme humide, c'est à dire qu'il n'est pas soumis à une étape de séchage ou de lyophilisation ou toute opération de ce type.

Dans la suite du procédé, le précipité peut être utilisé tel quel, ou éventuellement après remise en suspension aqueuse.

Le précipité est ensuite mis en contact avec au moins un acide et une phase organique, tels que définis précédemment (étape c).

Lorsque dans l'étape (c) le précipité est utilisé sous sa forme humide, la proportion en oxydes de cérium, en l'autre élément rhodium et/ou palladium et éventuellement en autre terre rare et/ou en fer, dudit précipité peut varier entre 10 et 50 % en poids par rapport à la masse du précipité humide. Les pourcentages en oxydes totaux peuvent être déterminés par pertes au feu, par exemple par calcination à 1000°C.

Pour obtenir une dispersion colloïdale organique dans l'étape (c), on met en contact le précipité éventuellement redispersé, avec au moins un acide et une phase organique du type de ceux qui ont été décrits plus haut. La quantité d'acide à incorporer peut être définie par le rapport molaire r : nombre de moles d'acide/ nombre de moles de cérium et, éventuellement de l'autre terre rare et/ou de fer.

Ce rapport molaire peut être compris 0,2 et 0,8, de préférence entre 0,3 et 0,6.

La quantité de phase organique à incorporer est ajustée de manière à obtenir une concentration en oxydes totaux telle que mentionnée plus haut.

A ce stade, il peut être avantageux d'ajouter dans la phase organique un agent promoteur dont la fonction est d'accélérer le transfert des particules de composé(s) de la phase aqueuse à la phase organique et d'améliorer la stabilité des dispersions colloïdales organiques obtenues.

A titre d'agent promoteur, on peut utiliser les composés à fonction alcool et tout particulièrement des alcools aliphatiques linéaires ou ramifiés ayant de 6 à 12 atomes de carbone. Comme exemples spécifiques, on peut citer l'éthyl-2 hexanol, le décanol, le dodécanol ou leurs mélanges.

La proportion dudit agent n'est pas critique et peut varier dans de larges limites. Toutefois, une proportion comprise entre 2 et 15 % en poids convient généralement bien.

L'ordre de l'introduction des différents réactifs est indifférent. On peut effectuer le mélange simultané du précipité ou de sa suspension aqueuse, de l'acide, de la phase organique, et éventuellement de l'agent promoteur. On peut également faire le prémélange de l'acide, de la phase organique et éventuellement de l'agent promoteur.

La mise en contact entre la dispersion colloïdale aqueuse et la phase organique peut se faire dans un réacteur qui est sous une atmosphère d'air, d'azote, ou un mélange d'air-azote.

Bien que la mise en contact entre la dispersion colloïdale aqueuse et la phase organique puisse se faire à température ambiante, environ 20°C, il est préférable d'opérer à une température choisie dans un intervalle allant de 60°C à 150°C, avantageusement entre 80°C et 140°C.

Dans certains cas, en raison de la volatilité de la phase organique, il y a lieu de condenser ses vapeurs par refroidissement à une température inférieure à son point d'ébullition.

Le mélange réactionnel résultant (mélange de dispersion colloïdale aqueuse, d'acide, de phase organique et éventuellement d'agent promoteur) est maintenu sous agitation pendant toute la durée du chauffage, durée qui peut être variable.

Lorsque l'on arrête le chauffage, on note la présence de deux phases : une phase organique contenant la dispersion colloïdale, et une phase aqueuse résiduelle.

Quelquefois on peut observer la présence d'une troisième phase émulsionnée.

On sépare ensuite la phase organique et la phase aqueuse selon les techniques classiques de séparation : décantation, centrifugation.

Comme indiqué plus haut, le procédé qui vient d'être décrit s'applique à la préparation d'une dispersion selon le mode de réalisation spécifique précité. Il est aussi possible de mettre en oeuvre un procédé différent de celui donné plus haut par le fait qu'il comprend entre les étapes b) et c) un séchage du précipité notamment par atomisation ou lyophilisation. Ce procédé conduit à une dispersion selon l'invention mais qui ne présente pas la caractéristique de monocristallinité des particules du mode de réalisation spécifique.

Les dispersions colloïdales organiques qui viennent d'être décrites peuvent être employées comme adjuvant de carburant, notamment de gazole, pour moteurs à combustion interne, plus particulièrement comme adjuvant des gazoles pour moteur diesel.

L'utilisation selon l'invention dans un carburant pour moteurs à combustion interne d'une dispersion colloïdale du type de celle qui a été décrite plus haut se fait par mélange d'un carburant usuel, notamment de type gazole avec la dispersion, généralement dans une proportion telle que le rapport élément Ce + élément Rh et/ou Pd métalliques + éventuellement élément terre rare et fer à la masse de carburant soit compris entre 5 et 200 ppm.

La présence selon l'invention des dispersions dans les carburants a pour effet de diminuer la température d'auto inflammation des suies ainsi que l'émission des oxydes d'azote dans les gaz d'échappement des moteurs et elle peut enfin contribuer à l'oxydation du monoxyde de carbone et des hydrocarbures imbrulés.

Des exemples vont maintenant être donnés.

### EXEMPLE 1

Cet exemple concerne la préparation d'une dispersion selon l'invention, à base de cérium, de fer et de rhodium. Cette préparation se fait en deux étapes : la première conduit à la formation d'un précipité solide en phase aqueuse, la seconde concerne le transfert en phase organique de ce précipité.

### 1) Synthèse d'un précipité solide en phase aqueuse

### a) Préparation d'une solution d'acétate de fer

On solubilise 206,1g de nitrate de fer (III) nonahydraté (Fe(NO₃)₃.9H₂O de pureté 98% de la société Prolabo) dans 11 d'eau épurée de manière à préparer une solution de titre 0,5 mole/l en Fe. Sur la solution de nitrate de fer ainsi préparée et mise sous agitation, on délivre au moyen d'une pompe péristaltique 270ml d'une solution d'ammoniaque volumée à 10%, à raison d'un débit de 10ml/min.

La suspension de pH neutre obtenue est centrifugée à 4500 tours/min pendant 12 minutes. Le précipité récupéré est remis en suspension au volume initial par de l'eau épurée. L'ensemble est mis sous agitation pendant 15 minutes, le précipité séparé une nouvelle fois dans les mêmes conditions, puis remis à nouveau en suspension à un volume final équivalent.

On obtient ainsi une dispersion de pH 6,5, sur laquelle on ajoute 100ml d'acide acétique (CH₃COOH 100% de la société Prolabo), pour aboutir à une solution d'acétate de fer de pH 2,7 et de concentration en oxyde de 2,8% en Fe₂O₃ (déterminée par perte au feu).

### b) Préparation d'une solution de co-acétates

On solubilise 139,7g d'acétate de cérium (III) cristallisé (Ce(CH₃COO)₃ de la société Rhodia Electronics and Catalysis comprenant 49,29% en oxyde CeO₂) dans 0,8l d'eau épurée. On ajoute sur cette solution 6,7g d'acide acétique (CH₃COOH 100% de la société Prolabo), 3g d'une solution de nitrate de rhodium (III) (Rh(NO₃)₃ concentré à 10% en Rh de la société Aldrich), puis 1124,6g de la solution d'acétate de fer préalablement préparée. Le mélange est complété à 2,51 par de l'eau épurée.

### c) Précipitation de la solution de co-acétates

La précipitation est réalisée dans un montage en continu comprenant :
- Un réacteur d'un litre équipé d'un agitateur à pales, réglé à 400 tours/min, avec un pied de cuve de 0,51 de solution basique (NH₄OH à pH=10,5) et d'une électrode asservie à une pompe régulatrice de pH dont la consigne est fixée à pH 10,5.
- Deux flacons d'alimentation contenant d'une part la solution de co-acétates préalablement préparée et d'autre part une solution d'ammoniaque 6N. Le débit de la solution de co-acétates est fixé à 500ml/h et le débit d'ammoniaque est asservi à la régulation de pH.
- Un système de soutirage permettant d'ajuster le volume dans le réacteur à 0,51 et connecté à un deuxième réacteur placé en série du premier.
- Un deuxième réacteur permettant de récupérer le précipité formé.

Le précipité est récupéré par centrifugation à 3000 tours/min pendant 12 minutes, puis remis en suspension dans de l'eau épurée à une concentration de 50g/l en oxyde total.

### 2) Transfert en phase organique

On introduit 340ml de la suspension aqueuse précédemment décrite dans un réacteur double enveloppe de 2 litres équipé d'un bain thermostaté. On ajoute à température ambiante une phase organique contenant 129,9g d'Isopar L (solvant paraffinique de la société Exxon) et 23,1g d'acide isostéarique (solution Prisorine 3501 de la société Uniquema) préalablement dissout.

On chauffe ensuite le mélange biphasique à 95°C en 1h30, la vitesse d'agitation étant fixée à 220 tours/min. Le mélange est maintenu à 95°C pendant 4 heures, puis laissé refroidir à température ambiante. La coalescence obtenue par arrêt de l'agitation révèle la formation d'une phase organique noire, surmontant une phase aqueuse limpide. La concentration en oxyde de la phase aqueuse, déterminée par perte au feu, est négligeable, ce qui témoigne d'un transfert quantitatif.

### 3) Caractérisation de la dispersion colloïdale organique à base de cérium, de fer et et de rhodium

La concentration de la phase colloïdale organique, déterminée après évaporation de l'Isopar L et calcination à 1000°C, est égale à 9,9% en oxyde total. La composition de l'oxyde dispersé en phase organique, déterminée par méthodes potentiométriques (Ce) et polarographiques (Fe), est équimolaire en Ce/Fe et contient 0,26% de rhodium (masse de rhodium métal/masse de cérium et de fer élémentaires), le rhodium étant dosé par ICP/OES. L'analyse par cryo-microscopie électronique à transmission de la phase colloïdale organique met en évidence des particules d'un diamètre de 3 à 5nm parfaitement individualisées.

### EXEMPLE 2

Cet exemple concerne l'évaluation sur un banc moteur du produit obtenu dans l'exemple précédent.

L'évaluation se fait en utilisant un moteur Peugeot diesel de 2,2l de cylindré, référence DW 12 TED4/L4, placé sur un banc dynamométrique. La ligne d'échappement est équipée d'un filtre à particules en carbure de silicium de provenance IBIDEN (5,66x6 200cpsi).

La dispersion de l'invention est ajoutée comme additif à un gazole contenant 7 ppm de soufre de manière à réaliser un dosage à 10 ppm (Ce+Fe+Rh métalliques) par rapport au gazole additivé.

Le filtre à particules est alors chargé dans les conditions suivantes :
- vitesse de rotation du moteur : 3000 t/mn
- couple : 30 Nm
- durée du chargement : 10 heures

Pendant cette phase de chargement, les émissions d'oxydes d'azote NO et NO₂ sont mesurées en continu avec un analyseur Ecophysic CLD 700.

On donne ci-dessous les résultats obtenus. L'essai comparatif est l'essai effectué avec comme additif une dispersion préparée selon le mode opératoire de l'exemple 1 mais sans rhodium.

| Essai | Emissions NO +NO₂ mesurées en fin de chargement du filtre (t = 10 h) en ppm |
|---|---|
| Exemple 2 | 100 |
| Comparatif | 125 |

On constate une réduction de 20% des rejets d'oxydes d'azote dans le cas de l'utilisation de la dispersion selon l'invention.

La totalité des suies accumulées dans le filtre pendant 10 heures est ensuite brulée à 500°C en 320 secondes.

## Revendications

1. Utilisation d'une dispersion colloïdale comme adjuvant de carburant pour moteurs à combustion interne pour diminuer l'émission des oxydes d'azote dans les gaz d'échappement des moteurs, **caractérisée en ce que** la dispersion comprend des particules d'un composé de cérium, un acide et une phase organique ainsi qu'un composé d'au moins un élément choisi parmi le rhodium et le palladium.

2. Utilisation selon la revendication 1, **caractérisée en ce que** la dispersion comprend des particules d'un composé de cérium et d'une autre terre rare.

3. Utilisation selon la revendication 1 ou 2, **caractérisée en ce que** la dispersion comprend des particules d'un composé de cérium, éventuellement d'une autre terre rare, et de fer.

4. Utilisation selon l'une des revendications précédentes, **caractérisée en ce que** la teneur en élément précité dans la dispersion est d'au plus 5% par rapport à l'ensemble des éléments cérium, autre terre rare et fer des particules précitées.

5. Utilisation selon l'une des revendications précédentes, **caractérisée en ce que** la teneur en élément précité dans la dispersion est d'au plus 0,5% par rapport à l'ensemble des éléments cérium, autre terre rare et fer des particules précitées.

6. Utilisation selon l'une des revendications précédentes, **caractérisée en ce que** le composé de l'élément précité de la dispersion est lié aux particules.

7. Utilisation selon l'une des revendications 3 à 6, **caractérisée en ce que** la dispersion comprend du cérium dans une proportion d'au plus 50%, plus particulièrement d'au plus 20% en mole d'oxyde de cérium CeO₂ par rapport au nombre total de moles d'oxyde de cérium et d'oxyde de fer Fe₂O₃.

8. Utilisation selon l'une des revendications 2 à 7, **caractérisée en ce que** l'autre terre rare de la dispersion est choisie parmi le lanthane et le praséodyme.

9. Utilisation selon l'une des revendications précédentes, **caractérisée en ce que** l'acide de la dispersion est un acide amphiphile.

10. Utilisation selon l'une des revendications précédentes **caractérisée en ce qu'**au moins 90 % des particules de la dispersion sont monocristallines.

11. Utilisation selon l'une des revendications précédentes, **caractérisée en ce que** les particules de la dispersion présentent un d₅₀ compris entre 1 et 5 nm, de préférence entre 2 et 4 nm.

## Claims

1. Use of a colloidal dispersion as a fuel additive for internal combustion engines to reduce emissions of nitrogen oxides in the exhaust gases of engines, **characterized in that** the dispersion comprises particles of a cerium compound, an acid and an organic phases and also a compound of at least one element selected from rhodium and palladium.

2. Use according to Claim 1, **characterized in that** the dispersion comprises particles of a compound of cerium and of another rare earth.

3. Use according to either of Claims 1 and 2, **characterized in that** the dispersion comprises particles of a compound of cerium, optionally of another rare earth, and of iron.

4. Use according to one of the preceding claims, **characterized in that** the content of the abovementioned element in the dispersion is not more than 5% with respect to the combination of the elements cerium, other rare earth and iron of the abovementioned particles.

5. Use according to one of the preceding claims, **characterized in that** the content of the abovementioned element in the dispersion is not more than 0.5% with respect to the combination of the elements cerium, other rare earth and iron of the abovementioned particles.

6. Use according to one of the preceding claims, **characterized in that** the compound of the abovementioned element of the dispersion is bound to the particles.

7. Use according to one of Claims 3 to 6, **characterized in that** the dispersion comprises cerium in a proportion of not more than 50%, more particularly not more than 20% in moles of cerium oxide CeO₂ with respect to the total number of moles of cerium oxide and iron oxide Fe₂O₃.

8. Use according to one of Claims 2 to 7, **characterized in that** the other rare earth of the dispersion is selected from lanthanum and praseodymium.

9. Use according to one of the preceding claims, **characterized in that** the acid of the dispersion is an amphiphilic acid.

10. Use according to one of the preceding claims, **characterized in that** at least 90% of the particles of the dispersion are single crystal particles.

11. Use according to one of the preceding claims, **characterized in that** the particles of the dispersion have a d₅₀ of between 1 and 5 nm, preferably between 2 and 4 nm.

## Patentansprüche

1. Verwendung einer kolloidalen Dispersion als Kraftstoffadditiv für Verbrennungsmotoren zur Verringerung der Emissionen von Stickoxiden in den Motorenabgasen, **dadurch gekennzeichnet, daß** die Dispersion Teilchen einer Cerverbindung, eine Säure und eine organische Phase sowie eine Verbindung mindestens eines unter Rhodium und Palladium ausgewählten Elements enthält.

2. Verwendung nach Anspruch 1, **dadurch gekennzeichnet, daß** die Dispersion Teilchen einer Cerverbindung und eines anderen Seltenerdmetalls enthält.

3. Verwendung nach Anspruch 1 oder 2, **dadurch gekennzeichnet, daß** die Dispersion Teilchen einer Cerverbindung, gegebenenfalls eines anderen Seltenerdmetalls und Eisen enthält.

4. Verwendung nach einem der vorhergehenden Ansprüche, **dadurch gekennzeichnet, daß** der Gehalt des obigen Elements in der Dispersion höchstens 5%, bezogen auf die Gesamtheit der Elemente Cer, anderes Seltenerdmetall und Eisen der obigen Teilchen, beträgt.

5. Verwendung nach einem der vorhergehenden Ansprüche, **dadurch gekennzeichnet, daß** der Gehalt des obigen Elements in der Dispersion höchstens 0,5%, bezogen auf die Gesamtheit der Elemente Cer, anderes Seltenerdmetall und Eisen der obigen Teilchen, beträgt.

6. Verwendung nach einem der vorhergehenden Ansprüche, **dadurch gekennzeichnet, daß** die Verbindung des obigen Elements der Dispersion an die Teilchen gebunden ist.

7. Verwendung nach einem der Ansprüche 3 bis 6, **dadurch gekennzeichnet, daß** die Dispersion Cer in einem Anteil von höchstens 50 Mol-%, insbesondere höchstens 20 Mol-%, Ceroxid CeO₂, bezogen auf die Gesamtzahl der Mole von Ceroxid und Eisenoxid Fe₂O₃, enthält.

8. Verwendung nach einem der Ansprüche 2 bis 7, **dadurch gekennzeichnet, daß** das andere Seltenerdmetall der Dispersion unter Lanthan und Praseodym ausgewählt ist.

9. Verwendung nach einem der vorhergehenden Ansprüche, **dadurch gekennzeichnet, daß** es sich bei der Säure der Dispersion um eine amphiphile Säure handelt.

10. Verwendung nach einem der vorhergehenden Ansprüche, **dadurch gekennzeichnet, daß** mindestens 90% der Teilchen der Dispersion einkristallin sind.

11. Verwendung nach einem der vorhergehenden Ansprüche, **dadurch gekennzeichnet, daß** die Teilchen der Dispersion einen d₅₀-Wert zwischen 1 und 5 nm, vorzugsweise zwischen 2 und 4 nm, aufweisen.
